# EUROPEAN PATENT APPLICATION

(11) **EP 1 494 154 A1**
(43) Date of publication of application: **05.01.2005**
(21) Application number: 03746001.1
(22) Date of filing: 11.04.2003
(51) Int. Cl.: G06F 17/60

(54) **SERVICE PROVIDING SYSTEM AND SERVICE PROVIDING METHOD**

(30) Priority: 11.04.2002 JP 2002109629
(71) Applicant: NTT DoCoMo, Inc., Tokyo 100-6150 (JP); Hewlett-Packard Company, Palo Alto, California 94304-1112 (US)
(72) Inventor: MACHIDA, Motohiro, c/o NTT DoCoMo, Inc., Tokyo 100-6150 (JP); ISO, Toshiki, c/o NTT DoCoMo, Inc., Tokyo 100-6150 (JP); KATAGIRI, Masaji, c/o NTT DoCoMo, Inc., Tokyo 100-6150 (JP); SUGIMURA, Toshiaki, c/o NTT DoCoMo, Inc., Tokyo 100-6150 (JP); SHIMIZU, Hidenori, Hachioji-shi, Tokio 193-0832 (JP); SUGAHARA, Taro, Setagaya-ku, Tokyo 157-0061 (JP); UKAI, Fumitoshi, Suginami-ku, Tokyo 168-0072 (JP); BOUNO, Hironori, Suginami-ku, Tokyo 168-0072 (JP); YUASA, Kei, Mountain View (US); MCEACHERN, Marc, Tokyo 153-0062 (JP)
(74) Representative: GROSSE BOCKHORNI SCHUMACHER
(86) International application number: PCT/JP2003/004639
(87) International publication number: WO 2003/085571

(57) **Abstract**

An object is to reduce the burden of processing on both a service server and a service utilizing terminal and improve operability for the both. There is provided a storage part 11 for integrally managing service provision information of various service types about an identical commodity, whereby user 50 can receive provision of a desired service by simply outputting a service provision request containing at least a commodity ID to system 1, which reduces the burden on the user who was required before to individually request the service provision from service providers 60 different depending upon the service types. The load of registration and the load of management of service provision information are also lighter than in conventional cases where the service provision information about one commodity was separately registered. Furthermore, procedure information about service provision is stored as shared procedure file 30 separately from the storage part 11, and storage location information of the procedure information is transmitted and received at the time of occurrence of a service request, whereby it is feasible to circumvent the disadvantage that a search for the procedure information requires considerable time to degrade operability because of congestion of data.

## Description

### Technical Field

The present invention relates to a service providing system for providing a service on the basis of a request from a service utilizing terminal, and a service providing method in the service providing system. It is noted that the term "identifier" in the present specification encompasses, for example, commodity identifiers for identifying commodities; identifiers about sites such as sites of sale of commodities, sites of provision of services, etc.; identifiers of image files such as moving pictures, still pictures, etc. for advertising or introducing the contents of commodities and services; and so on.

### Background Art

In the conventional electronic commerce, where a service utilizing user conducted a variety of transactions about one commodity, e.g., purchase of a certain commodity, a request for repair of the commodity, etc., it was common practice for the user to access individual Internet websites (home pages) and request provision of services independently of each other.

However, it was time-consuming and complicated for a service provider to preliminarily register the contents of provision of services individually corresponding to types of services such as sale, repair, etc. about the same commodity. It was also time-consuming for the service utilizing user to individually request the provision of services corresponding to types of services, because there were a wide variety of types of services about one commodity.

For this reason, there were strong expectations for establishing a scheme of integrating the service information for each of commodities and permitting a request to be made using an identifier as a key and for thereby reducing the burden of the pre-registration transaction with a server (service server) on the service provider side and the burden of the request transaction at the service utilizing terminal of the user.

In this case, however, since the procedure information about the service provision is also integrally stored, the data volume of the procedure information to be stored becomes enormous and a search of the procedure information requires substantial time all the more, which raises the concern that operability is degraded for the both service server and service utilizing terminal.

The present invention has been accomplished in order to solve the above problem and an object of the invention is to construct a scheme of storing the procedure information about provision of services as a shared procedure file and transmitting and receiving only pointer information to the procedure file at the time of occurrence of a service request, thereby providing a service providing system and a service providing method capable of reducing the burden of processing on the both service server and service utilizing terminal and improving the operability for the both.

### Disclosure of the Invention

In order to achieve the above object, a service providing system according to the present invention comprises a request receiving part for receiving a service provision request containing at least an identifier, from a service utilizing terminal; a storage part for storing service provision information containing at least information of a service type, an access point address of a service server, and a procedure file storage location about a procedure file storing service procedure information necessary for provision of a service, based on each identifier; and a search part for searching the storage part for the service provision information corresponding to the received service provision request.

The service procedure information stored in the procedure file is, for example, an access protocol, a user authentication method and sequence, a charge billing method and sequence, and so on.

In the above service providing system, the storage part stores the service provision information of various transactions (sale, repair, etc.) about each commodity, and this service provision information contains at least the information of the service type, the access point address of the service server, and the procedure file storage location. Here the expression "storing service provision information, based on each identifier" is intended to encompass not only a case of storing the information corresponding to each identifier, but also a case of converting each identifier into a converted identifier on the basis of a predetermined rule and storing the information corresponding to each converted identifier.

When the service utilizing terminal outputs a service provision request containing at least an identifier, the request receiving part receives this service provision request and the search part searches the storage part for the service provision information corresponding to the received service provision request (i.e., the service provision information stored in correspondence with the identifier included in the request). At this time, for example where the service provision request contains a service type, it becomes feasible to perform the search while narrowing the search range to the service provision information about the service type in the request.

This realizes the configuration wherein, instead of storing the entire procedure information about service provision at one location, the procedure information about service provision is separately stored as a procedure file and the service provision information contains the procedure file storage location information as pointer information to the procedure file so as to implement integrated management thereof, which makes it feasible to circumvent the disadvantage that the data volume of the procedure information to be stored becomes enormous and the search for the procedure information requires substantial time so as to degrade the operability for both the service server and service utilizing terminal.

Since the service provision information of various service types about the same commodity is integrally managed, the burden of registration and the burden of management of service provision information are reduced, as compared with the conventional systems where the service provision information about one commodity was individually registered.

At this time, the service providing system according to the present invention is desirably configured to further comprise a readout part for reading the service procedure information out of the procedure file, based on the procedure file storage location information in the service provision information acquired in the search by the search part; and an instructing part for instructing the service server on the basis of the access point address to provide the service based on the service procedure information read out by the readout part.

In this case, the readout part reads the service procedure information out of the procedure file, based on the procedure file storage location information included in the service provision information acquired in the aforementioned search, and the instructing part instructs the service server on the basis of the access point address to provide the service based on the service procedure information thus read out. The service server, receiving the instruction, provides the service for the service utilizing terminal along the procedure based on the service procedure information.

This permits the service utilizing terminal to receive the provision of the desired service by simply outputting the service provision request containing at least the identifier, to the present service providing system, which reduces the load of the request transaction imposed on the user who was required before to access different access points depending upon service types and request the provision of services individually.

The service providing system according to the present invention may be configured to store the procedure file containing the service procedure information necessary for the service provision in itself, or the procedure file may be located outside the system.

The service providing system according to the present invention is desirably configured to further comprise a conversion part for converting a received identifier into a converted identifier, based on a predetermined conversion rule, and configured so that the storage part stores the service provision information in correspondence with the converted identifier by the conversion part.

In this case, for example, even where various identifiers such as the JAN codes, the ISBN codes, etc. are used, the above conversion can provide such converted identifiers as to ensure uniqueness in the service providing system.

The service providing system as described above may be configured to further comprise an information receiving part for receiving an identifier and service provision information from a service provision information registration server, and configured so that the storage part newly stores the received service provision information on the basis of the received identifier. In this configuration, when the service provision information registration server outputs an identifier and service provision information about a service to be registered, the information receiving part receives these identifier and service provision information and the storage part newly stores the received service provision information in correspondence with the received identifier, which permits the service provision information registration server to achieve the registration of the service provision information. The above expression "stores the information on the basis of the received identifier" is intended to encompass not only a case of storing the information corresponding to each received identifier, but also a case of converting a received identifier into a converted identifier according to a predetermined rule and storing the information corresponding to the converted identifier.

The service providing system as described above may also be configured so that the instructing part is configured as follows: where there exist multiple service procedure information entities read out, the instructing part inquires for service provision content details at service servers corresponding to the multiple service procedure information entities, selects one service procedure information entity on the basis of the service provision content details obtained, and instructs the associated service server to provide a service based on said one service procedure information entity. In this configuration, even in the case where there exist multiple service procedure information entities read out, the instructing part inquires for the service provision content details at the service servers corresponding to the multiple service procedure information entities, selects one service procedure information entity on the basis of the obtained service provision content details, and instructs the associated service server to provide the service based on the one service procedure information entity, which ensures smooth execution of the service provision.

Incidentally, just as in the case where food articles have their respective expiration dates and sale services of food articles have limit dates, there exists service provision with limit dates, among the service provision of various commodities. If the service provision information is continuously stored without a limit in the management of the service provision information, the data volume will become enormous. Therefore, it is desirable in certain cases to narrow down the period when the service provision information is valid, to some extent, with consideration to characteristics of service provision.

Under the above circumstances, the above service providing system may be configured so that an information expiration date about validity of information is set for each of the service provision information, and so that the search part extracts only the service provision information within the information expiration date and presents the extracted information as a result of the search. This configuration enables the system to manage the expiration date of service provision information with consideration to the characteristics of service provision, thereby achieving smooth service provision.

The above service providing system may also be configured so that a service expiration date about validity of service provision is set for each of the service provision by the service server, and so that the search part extracts only the service provision information about the service provision within the service expiration date and presents the extracted information as a result of the search. This configuration enables the system to perform smooth management of the service provision information about the service provision of commodities with expiration dates.

Incidentally, the invention associated with the service providing system described above can also be taken as the invention associated with the service providing method as described below. It is noted that these aspects of the invention are based on the substantially identical technical idea and provide like action and effect.

Namely, in order to achieve the above object, a service providing method according to the present invention is a service providing method in a service providing system comprising a storage part storing service provision information containing at least information of a service type, an access point address of a service server, and a procedure file storage location about a procedure file storing service procedure information necessary for provision of a service on the basis of each identifier and providing a service on the basis of a request from a service utilizing terminal, the service providing method comprising: a request receiving step of receiving a service provision request containing at least an identifier, from the service utilizing terminal; and a search step of searching the storage part for the service provision information corresponding to the received service provision request.

The above service providing method is desirably configured to further comprise a readout step of reading the service procedure information out of the procedure file, based on the procedure file storage location information in the service provision information acquired in the search; and an instruction step of instructing the service server on the basis of the access point address to provide the service based on the service procedure information read out.

In the service providing method according to the present invention, where there exist multiple service procedure information entities read out, the instruction step is desirably configured to inquire for service provision content details at service servers corresponding to the multiple service procedure information entities, select one service procedure information entity on the basis of the multiple service provision content details obtained, and instruct the associated service server to provide the service based on said one service procedure information entity.

The service providing method according to the present invention is desirably configured so that an information expiration date about validity of information is set for each of the service provision information and so that the search step is to extract only the service provision information within the information expiration date and present the information as a result of the search.

The service providing method according to the present invention is desirably configured so that a service expiration date about validity of service provision is set for each of the service provision by the service server and so that the search step is to extract only the service provision information about the service provision within the service expiration date and present the information as a result of the search.

### Brief Description of the Drawings

Fig. 1 is a block diagram showing a configuration of a service providing system in an embodiment of the invention.
Fig. 2 is an illustration showing a conceptual configuration of the storage part.
Fig. 3 is an illustration showing an example of service provision information.
Fig. 4 is a block diagram showing a modification example of the configuration of the service providing system shown in Fig. 1.
Fig. 5 is an illustration for explaining the flow of information.
Fig. 6 is a flowchart of a service provision information registration process.
Fig. 7 is a flowchart of a service provision information search process.
Fig. 8 is a flowchart showing a first example of the procedure file readout process and procedure process.
Fig. 9 is a flowchart showing a second example of the procedure file readout process and procedure process.
Fig. 10A is a block diagram showing a configuration with the conversion part in the controller shown in Fig. 1.
Fig. 10B is a block diagram showing a configuration with the conversion part in the controller shown in Fig. 4.

### Best Mode for Carrying out the Invention

Embodiments of the present invention will be described below.

### [Configuration of Service Providing System]

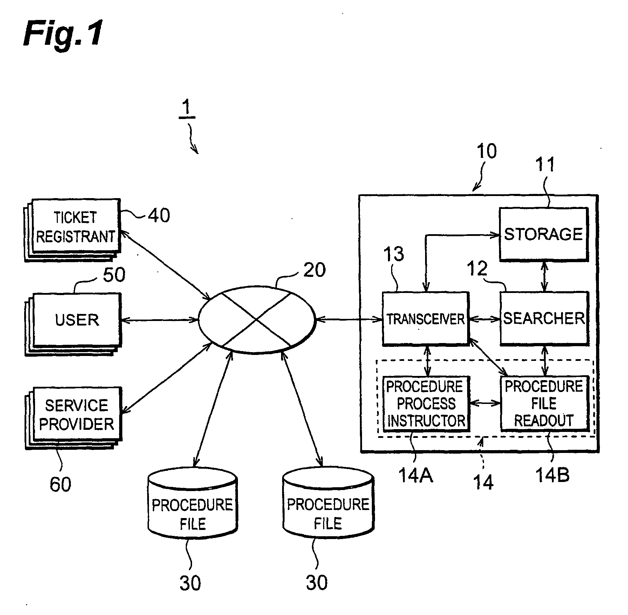

Fig. 1 shows service providing system 1 envisaged in the present embodiment. As shown in this Fig. 1, the service providing system 1 is comprised of controller 10 which is the core of the present system to perform control about service provision; and a plurality of procedure files 30 each storing service procedure information necessary for service provision (e.g., an access protocol, a user authentication method and sequence, a charge billing method and sequence, etc.), and these are connected to Internet Protocol (IP) network 20 so as to be communicable with each other. Servers operated by parties to request registration of service provision information (tickets) described later (which will be represented simply by "ticket registrant" and which correspond to the "service provision information registration server" according to the present invention) 40, terminals operated by users to request provision of desired services (which will be represented simply by "user" and which correspond to the "service utilizing terminal" according to the present invention) 50, and service providers to provide services requested (which will be represented simply by "service provider" and which correspond to the "service server" according to the present invention) 60 are connectible to the IP network 20. These are able to transmit and receive various requests and data to and from controller 10. There exist a lot of ticket registrants 40 and a lot of service providers 60, which have various service categories, locations, etc., and there also exist a lot of users 50 with varying gender, ages, addresses, and so on. Namely, the service providing system 1 is configured to be shared among various ticket registrants 40, service providers 60, and users 50.

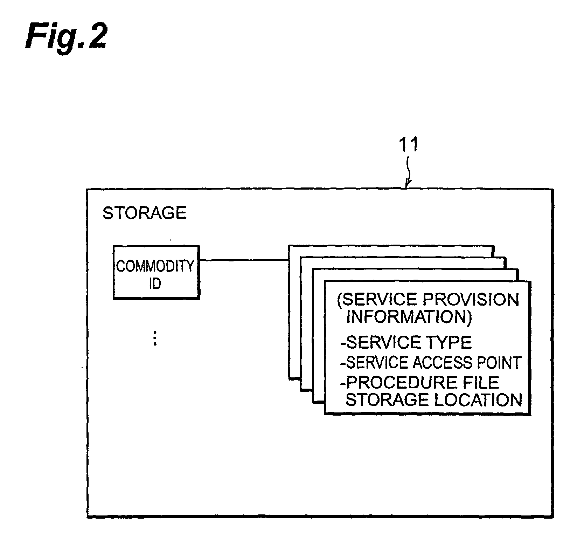

The controller 10 is comprised of storage part 11 which stores service provision information each containing at least information of a service type, an access point address of a service provider, and a procedure file storage location for each commodity identification information (commodity ID) as shown in Fig. 2; transceiver part 13 which receives a service provision request containing at least a commodity ID from user 50, which receives service provision information to be registered, with a corresponding commodity ID from ticket registrant 40, and which performs transmission and reception of various requests and data; search part 12 which searches the storage part 11 for service provision information corresponding to a service provision request from a user; and procedure control part 14 which reads out service procedure information based on procedure file storage location information in service provision information obtained by a search and which gives an instruction of service provision based on the service procedure information.

Among these components, the procedure control part 14 is comprised of procedure file readout part 14B which reads service procedure information out of procedure file 30, based on the procedure file storage location information in the service provision information acquired in a search by the search part 12; and procedure process instructing part 14A which accesses a service provider 60 on the basis of an access point address in the service provision information and which instructs the service provider 60 to perform the service provision on the basis of the service procedure information thus read out. The storage part 11 also has a function of storing new service provision information received from ticket registrant 40 in correspondence with a commodity ID.

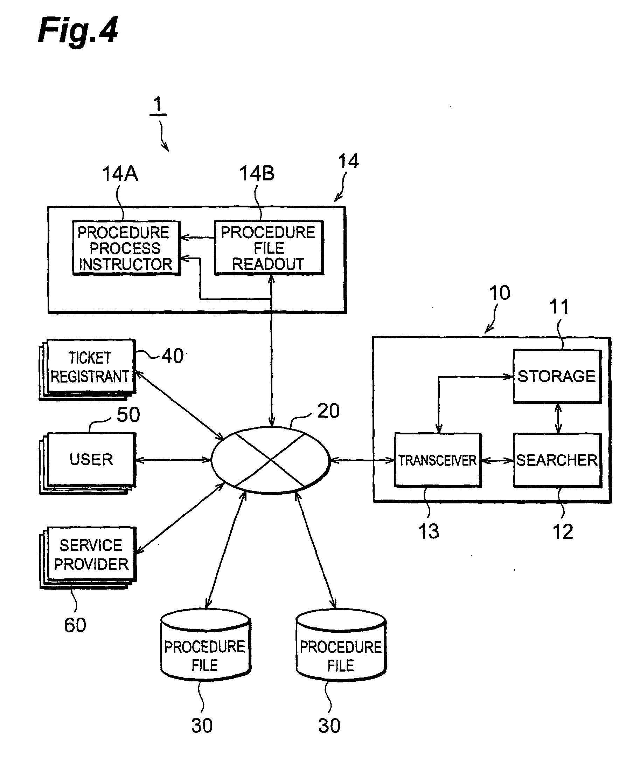

The procedure control part 14 may also be configured, as shown in Fig. 4, to be provided outside the controller 10 and independently of the controller 10 and connected to the IP network 20. In this configuration where the procedure control part 14 is provided outside the controller 10, there are also cases where a plurality of procedure control parts 14 are connected to the IP network 20 and the procedure control parts 14 collaborate to select an optimal procedure point according to circumstances of each user.

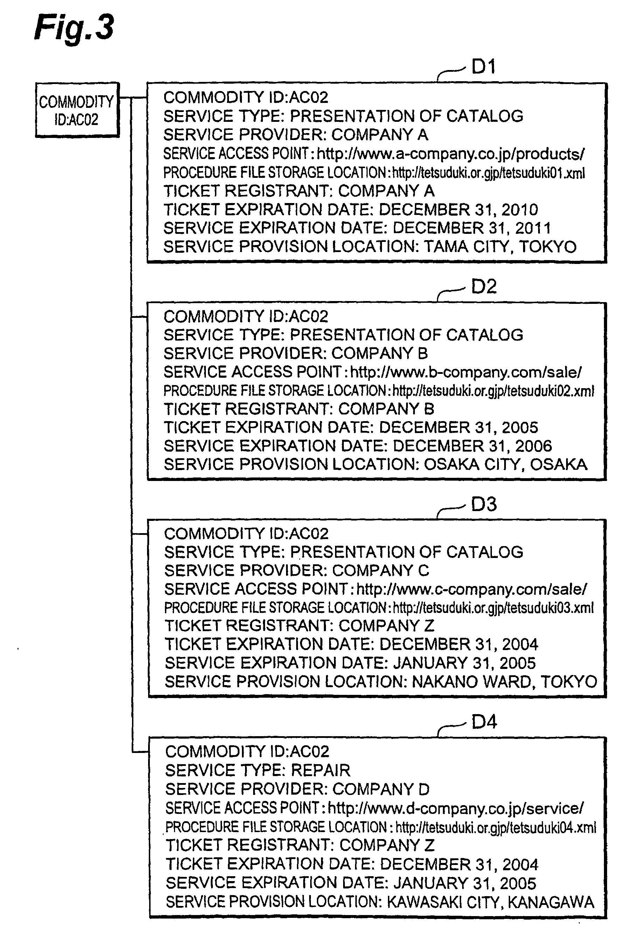

The service provision information stored in storage part 11 will be described below referring to Fig. 3. As shown in Fig. 3, service provision information entities D1, D2, D3, D4 are stored in correspondence with respective commodity IDs (e.g., AC02) in the storage part 11.

Each service provision information entity contains various information, for example, ① a commodity ID, ② a service type indicating a type of a service such as presentation of a catalog, sale, or the like, ③ a name of a service provider, ④ a service access point indicating an address of an access point of the service provider, ⑤ a storage location of a procedure file indicating an address of a storage location of the procedure file, ⑥ a name of a ticket registrant that registered the service provision information (ticket), ⑦ an expiration date of the service provision information (ticket) itself (which will be referred to hereinafter as a ticket expiration date), ⑧ a service expiration date about the service corresponding to the service provision information, and ⑨a service provision location indicating a site where the service is provided.

In general, ticket registrant 40 in Fig. 1 agrees with service provider 60 of the service corresponding to the service provision information to be registered, but it is also assumed in the present embodiment that these service provider 60 and ticket registrant 40 are different from each other in certain cases. For example, conceivable cases include a case where a certain industry group serves as ticket registrant 40 and individual service providers in the industry as service providers 60, a case where one service management company in a certain enterprise group in capital alliance acts as ticket registrant 40 and the other companies in the enterprise group as service providers 60 in service fields of the respective companies, and so on. In the example of Fig. 3, the service provision information entities D1, D2 show examples where the service provider 60 and ticket registrant 40 agree with each other, and the service provision information D3 shows an example where the service provider 60 is Company C and the ticket registrant 40 Company Z, so that they are different from each other. The service provision information D4 also shows an example where they are different from each other, as D3 did.

### [Operation of Present Embodiment]

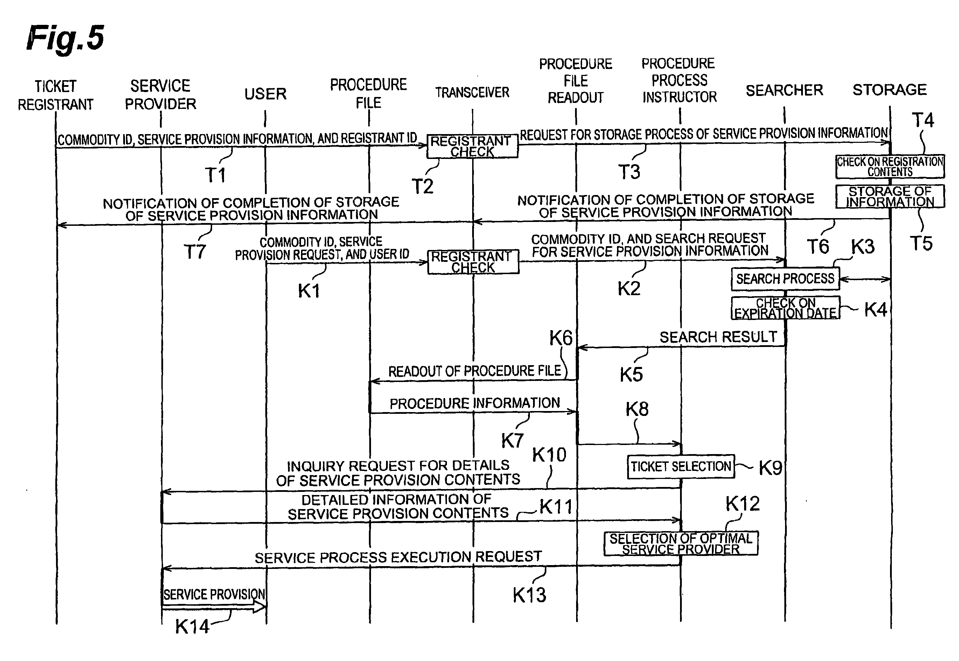

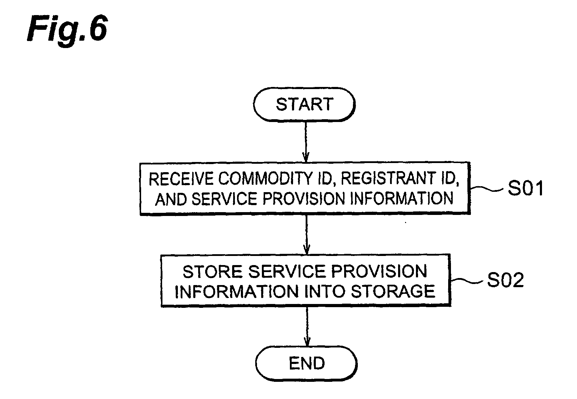

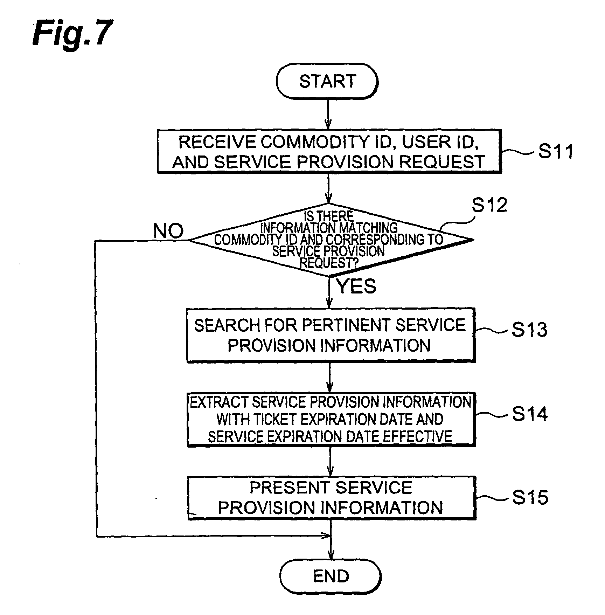

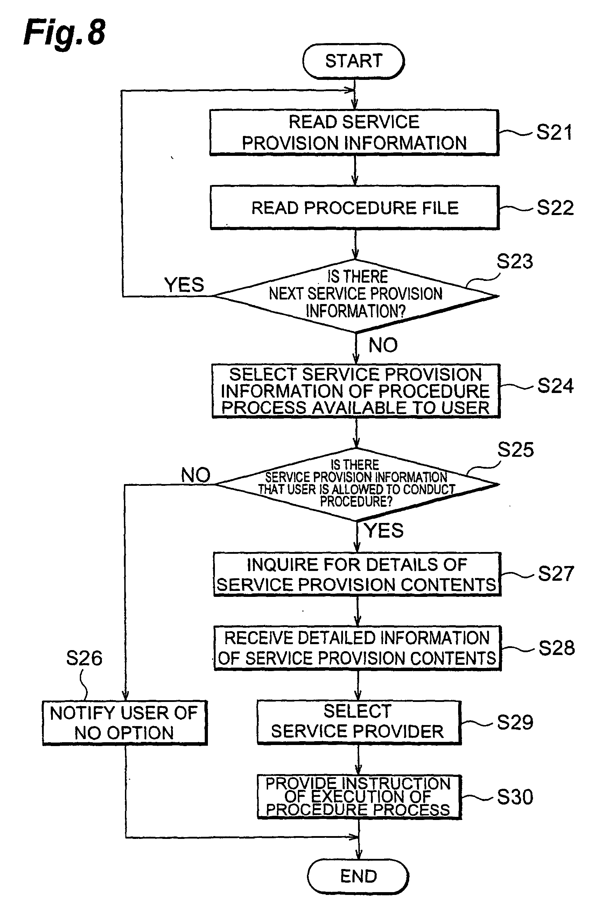

The operation of the present embodiment will be described below in order as to the service provision information registration process (Fig. 6), service provision information search process (Fig. 7), and readout and procedure process (Fig. 8) executed by the controller 10 of Fig. 1, with reference to the information flowchart of Fig. 5.

### [Service Provision Information Registration Process]

First, the service provision information registration process (Fig. 6) will be described. A ticket registrant 40 first sends a commodity ID and service provision information to be registered, together with identification information of the ticket registrant 40 (registrant ID) to the controller 10 through the IP network 20 (T1 in Fig. 5), and then the transceiver part 13 receives these commodity ID, service provision information, and registrant ID at S01 in Fig. 6. Here the transceiver part 13 is desirably configured to collate the above received registrant ID with a registrant DB preliminarily storing registrant IDs not shown, thereby authenticating whether the registrant is a qualified ticket registrant 40 (T2 in Fig. 5).

When the registrant is authenticated as a qualified ticket registrant 40, the transceiver part 13 transmits a storage process request of the received service provision information to the storage part 11 (T3 in Fig. 5). Receiving this request, the storage part 11 performs a storage process of the service provision information at S02 in Fig. 6. At this time, as shown in Fig. 5, the storage part 11 checks whether or not there are inadequacies such as lack of necessary items in the service provision information to be registered (T4) and stores only the service provision information without inadequacies(T5). Then the storage part 11 notifies the ticket registrant 40 through the transceiver part 13 of the completion of the storage of the service provision information (T6, T7).

In a desired configuration, where there are inadequacies in the service provision information, the storage part 11 notifies the ticket registrant 40 through the transceiver part 13 of the fact of the inadequacies and the contents of the inadequacies.

The qualified ticket registrant 40 can surely register the service provision information in a state without inadequacies in the manner as described above.

### [Service Provision Information Search Process]

The service provision information search process (Fig. 7) will be described below. First, a user 50 reads a commodity ID from a medium that can express a numeral and character identifier (an alphanumeric code, a bar code, a two-dimensional bar code, an RF-ID or IrDA beacon, or the like) and sends the commodity ID and a service provision request together with identification information (user ID) of the user 50 to the controller 10 through the IP network 20 (K1 in Fig. 5). Then the transceiver part 13 receives these commodity ID, service provision request, and user ID at S 11 in Fig. 7. The transceiver part 13 herein is desirably configured to collate the received user ID with a user DB preliminarily storing user IDs not shown, to authenticate whether the user is a qualified user 50.

When the user is authenticated as a qualified user 50, the transceiver part 13 then sends a search request for the service provision information corresponding to the received commodity ID and service provision request, to the search part 12 (K2 in Fig. 5). Receiving this request, the search part 12 accesses the storage part 11 at S12 in Fig. 7 to determine whether the service provision information matching the commodity ID and corresponding to the service provision request is stored in the storage part 11 or not.

When there is no service provision information matching the commodity ID and corresponding to the service provision request herein, the process of Fig. 7 is terminated. On the other hand, when there is the service provision information matching the commodity ID and corresponding to the service provision request, the flow proceeds to S13 in which the search part 12 searches the storage part 11 for pertinent service provision information (K3 in Fig. 5).

Then at S14 the search part 12 checks the ticket expiration date and service expiration date for each of the service provision information acquired in the above search, and extracts the service provision information with both the ticket expiration date and service expiration date being valid, out of the acquired service provision information (K4 in Fig. 5). At next S 15 the search part 12 submits the service provision information obtained as a result of the extraction, as a search result, to the procedure file readout part 14B (K5 in Fig. 5).

In this manner the controller acquires the service provision information which corresponds to the service provision request sent by the user 50 and which is valid, as a search result. This service provision information is submitted to the procedure file readout part 14B and thereafter it is referred to in the subsequent readout and procedure process (Fig. 8).

It is desirable to regularly perform the process of extracting the service provision information with the ticket expiration date and service expiration date both valid at S14, for the purpose of deleting unnecessary expired service provision information to clean up the service provision information, as well as on occasions of searches as described above. The utilization of the ticket expiration date and service expiration date also presents the advantage that it becomes feasible to manipulate the information presenting process to users by extracting effective service provision information with the ticket expiration date and service expiration date both being effective at S14, for example, without notification of an end of time sale of commodities based on update of an Internet website or the like.

### [Readout and Procedure Process]

The readout and procedure process (Fig. 8) will be explained below.

When the procedure file readout part 14B receives the service provision information as a search result from the search part 12 (K5 in Fig. 5), it reads the service provision information at S21 in Fig. 8, and reads the procedure information out of the procedure file 30 on the basis of the procedure file storage location information included therein, at S22 (K6, K7 in Fig. 5). These processes of S21 and S22 are executed for all the service provision information entities obtained as the search result (S21-S23).

Then the procedure file readout part 14B sends the procedure information about each service provision information obtained by the above processes of S21-S23, to the procedure process instructing part 14A (K8 in Fig. 5). At S24 the procedure process instructing part 14A selects the service provision information of procedure processes available to the user 50 out of the above service provision information on the basis of the procedure information (K9 in Fig. 5). The procedure process instructing part 14A determines in the selection whether there is any service provision information that is available to the user 50 (or that permits the user to conduct a procedure)(S25). If there is no service provision information available to the user 50, the flow goes to S26 to notify the user 50 of no available option and terminate the process of Fig. 8.

On the other hand, if there is service provision information available to the user 50 at S25, the flow proceeds to S27 in which the procedure process instructing part 14A accesses pertinent service provider 60 on the basis of the service access point information in the service provision information to inquire for the details of the service provision contents (K10 in Fig. 5), and receives the detailed information of the service provision contents at S28 (K11 in Fig. 5). Here the detailed information of the service provision contents is, for example, information such as "a price of a commodity," "five days for delivery," "We accept only credit cards issued by Company F," and so on in the case of sale.

In the case where there are multiple service provision information entities available to the user 50, the instructing part inquires for the detailed information of service provision contents about each of those information entities and receives the detailed information thereof, which is not illustrated in Fig. 8.

At S29 the procedure process instructing part 14A then selects one service provision information and service provider 60 optimal for the user, based on the contents of the service provision information and the detailed information of the service provision contents (K12 in Fig. 5). For example, it can select as one optimal service provision information, the service provision information with the service provision location nearest to the address of the user.

This selection process may be arranged so that, prior to S29, the available service provision information entities and detailed information thereof are presented to the user, the user is requested to enter new selection criterion information (e.g., a cost condition, the number of commodities purchased, the number of articles repaired, etc.), and a further narrowing search is carried out to narrow down the service provision information on the basis of the new criterion; whereby it becomes feasible to achieve an efficient search for the service provision information closer to the user's desire.

Furthermore, at S30 the procedure process instructing part 14A sends an instruction of execution of the procedure process together with the procedure information corresponding to the service provision information selected at S29, to pertinent service provider 60 (K13 in Fig. 5). Receiving it, the service provider 60 provides the service for the user 50 on the basis of the procedure information (K14 in Fig. 5).

As described above, the user 50 is allowed to receive the provision of the desired service about the desired commodity.

Incidentally, Fig. 8 above illustrated the mode in which the procedure process instructing part 14A acquired the detailed information about the available service provision from each service provider 60 and selected one service provision information with reference to the detailed information as well, but it is also possible to adopt a mode in which the instructing part 14A selects one service provision information with reference to only the contents of the service provision information without reference to the above detailed information. For example, in the case where the service provision information contains the service provision location information as in Fig. 3 and where the service provision information is selected under the condition that the service provision location to be selected should be closest to the current address of the user, one service provision information can be selected with reference to only the contents of the service provision information, while skipping the process of acquiring the detailed information.

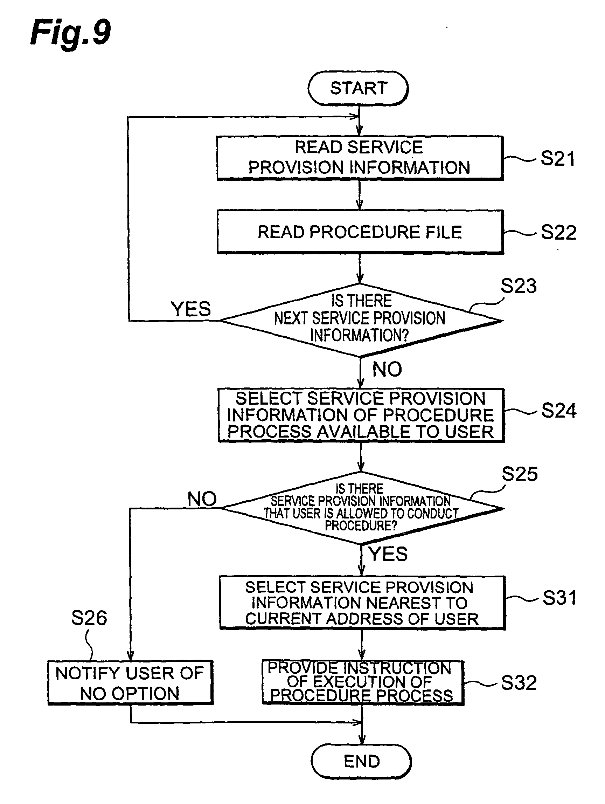

Specifically, the process can be arranged as shown in Fig. 9. Namely, where the judgment at S25 in Fig. 9 is yes, the instructing part 14A refers to the service provision location information in the service provision information at S31 to select the service provision information with the service provision location closest to the current address of the user. At S32 the instructing part 14A sends an instruction of execution of the procedure process together with the procedure information corresponding to the selected service provision information to pertinent service provider 60 (K13 in Fig. 5). Receiving it, the service provider 60 provides the service for the user 50 on the basis of the procedure information (K14 in Fig. 5).

The processing mode of selecting the service provision information on the basis of the location will be described along Fig. 9 in this configuration where the service provision request is related to sale. It is assumed in the description below that the information entities D1-D4 in Fig. 3 are stored as service provision information, the current address of user 50 is in the Tokyo Metropolitan Prefecture, and procedure processes available to the user are Process B and Process C. Let us also suppose that the procedure process of the service provided by the service provider of Company B is Process B, and the procedure process of the service provided by the service provider of Company C is Process C.

In this case, the process of Fig. 7 results in obtaining the service provision information of the service provision information entities D2, D3 about the commodity ID "AC02" in Fig. 3 as the search result. In the process of Fig. 9, the service provision information D2 is read at S21 and the procedure information is read out of the procedure file 30 corresponding to D2 at S22. This results in finding that the procedure process of the service provided by the service provider of Company B is Process B. Likewise, the processes of S21 and S22 are also carried out for the service provision information D3 to read the procedure information from the procedure file 30 corresponding to D3, whereby it is found that the procedure process of the service provided by the service provider of Company C is Process C.

Since at S24 the procedure processes available to the user are Process B and Process C, it can be said that the procedure processes of services by the respective companies, Company B and Company C, both are available to the user. Therefore, the service provision information entities D2 and D3 both are selected.

At next S31, because the current address of the user 50 is in the Tokyo Metropolitan Prefecture and because Company B is located in the Osaka Prefecture and Company C is located in the Tokyo Metropolitan Prefecture, the service provision information D3 associated with Company C is selected as the service provision information closest to the current address of the user. At S32 thereafter, an instruction of execution of the procedure process is sent together with the procedure information corresponding to the service provision information D3 (e.g., various procedure information necessary for the procedure corresponding to D3, such as a purchaser name, an address, a telephone number, a credit card number, and the like) to Company C. Receiving it, Company C provides the sale service of the commodity ID "AC02" for the user 50 on the basis of the procedure information. In this manner the user 50 is allowed to receive the provision of the desired sale service about the desired commodity "AC02," on the basis of the selection of the service provision information under the condition that the provider location should be closest to the user current address. It is a matter of course that the above processing can also be applied to cases where the service provision information is selected under other conditions (e.g., the condition that the sale price should be lowest).

Since the present embodiment as described above employed the configuration wherein, instead of storing the entire procedure information about service provision at one location, the procedure information about service provision is stored as procedure file 30 separately from the storage part 11 and wherein the pointer information (procedure file storage location information) to the procedure file 30 is included in the service provision information to implement the integrated management thereof, it can present the effect that it is feasible to circumvent the disadvantage that the operability is degraded for both the service provider 60 and user 50 because of the time-consuming search for procedure information.

Since the service provision information of various service types about the same commodity is integrally managed in the storage part 11, the present embodiment provides the effect that the burden of registration and the burden of management of the service provision information are reduced, as compared with the conventional systems wherein the service provision information entities about one commodity were separately registered.

Furthermore, the user 50 is allowed to receive the provision of the desired service by simply outputting the service provision request containing the identifier to the present service providing system 1, which presents the effect that the load becomes lighter on the user who was required before to individually access different service providers 60 according to service types and request provision of services.

Fig. 3 described above shows an example of the service provision information (tickets), but the types of information stored do not have to be limited to those shown in Fig. 3; for example, it is also possible to store information such as an access protocol to a service provider, a charge, and so on.

The above embodiment described the example in which the service provision information was stored for each commodity identification information (commodity ID) in the storage part 11 as shown in Fig. 2 and in which the controller 10 performed the search using the received commodity ID as a key as it is. It is, however, also possible to adopt an embodiment in which the controller 10 converts the received commodity ID into a converted ID and performs the search using the converted ID as a key, as described below.

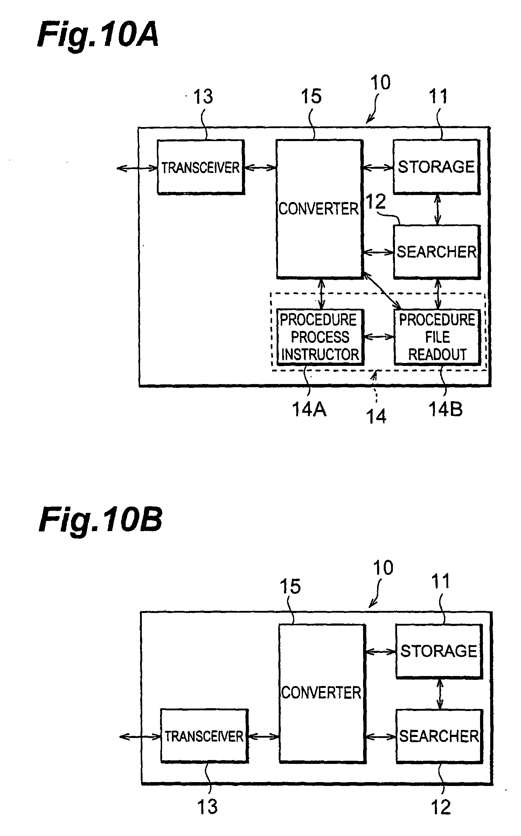

For example, the controller 10 in Fig. 1 may be configured, as shown in Fig. 10A, to further comprise conversion part 15 for converting a received commodity ID on the basis of a predetermined conversion rule and configured so that the conversion part 15 converts a received commodity ID into a converted ID and the search part 12 performs the search using the converted ID as a key. Similarly, the controller 10 in Fig. 4 may be configured, as shown in Fig 10B, to further comprise the conversion part 15 for converting a received commodity ID on the basis of a predetermined conversion rule and configured so that the conversion part 15 converts a received commodity ID into a converted ID and the search part 12 performs the search using the converted ID as a key. The above conversion part 15 may be configured so that the conversion part 15 itself determines whether the received commodity ID should be converted, or so that the conversion part 15 determines whether the received commondity ID should be converted, based on an instruction from the procedure process instructing part 14A.

A specific conversion technique in the conversion part 15 is, for example, as follows: where a commodity ID entered is one in the existing coding scheme like the JAN code or the ISBN code, Name Space indicating the coding scheme (e.g., JAN, ISBN, a mail address of an issue requester such as an individual person or the like, etc.) and Date (a date of a request of issue) are defined as a tag authority, and the tag authority is combined with a local ID ensuring uniqueness in Name Space, whereby the input commodity ID can be converted into a versatile ID.

By introducing the conversion technique as described above, it becomes feasible to deal with the existing coding schemes like JAN and ISBN as they are, which presents the advantage that high compatibility can be held with the existing coding schemes.

Furthermore, the above embodiment described the example of the commodity identifier for identifying the commodity, as an example of the "identifier" according to the present invention, but it should be noted that the "identifier" according to the present invention is by no means limited to this example and that the identifier is intended to encompass identifiers about sites such as sites of sale of commodities, sites of provision of services, etc.; identifiers of image files such as moving pictures or still pictures for advertising or introducing commodities or contents of services, etc., in addition to the commodity identifiers.

### Industrial Applicability

As described above, the present invention substantialized the configuration wherein, instead of storing the entire procedure information about service provision at one location, the procedure information about service provision is separately stored as a procedure file and the procedure file storage location information is included as pointer information to the procedure file in the service provision information so as to implement the integrated management thereof, whereby it is feasible to circumvent the disadvantage that the data volume of the procedure information to be stored becomes enormous and the search for the procedure information requires substantial time to degrade the operability for both the service server and service utilizing terminal according to the present invention.

Since the service provision information of various service types about the same commodity is integrally managed, the burden of registration and the burden of management of service provision information are reduced, as compared with the conventional systems wherein service provision information entities about one commodity were individually registered.

The service utilizing terminal according to the present invention is allowed to receive the provision of the desired service by simply outputting the service provision request containing at least the identifier to the present service providing system, which reduces the load of the request process on the user who was required before to individually access the different access points according to the service types and request provision of services.

## Claims

1. A service providing system comprising: a request receiving part for receiving a service provision request containing at least an identifier, from a service utilizing terminal; a storage part for storing service provision information containing at least information of a service type, an access point address of a service server, and a procedure file storage location about a procedure file storing service procedure information necessary for provision of a service, based on each identifier; and a search part for searching the storage part for the service provision information corresponding to the received service provision request.

2. The service providing system according to Claim 1, further comprising: a readout part for reading the service procedure information out of the procedure file, based on the procedure file storage location information in the service provision information acquired in the search by the search part; and an instructing part for instructing the service server on the basis of the access point address to provide the service based on the service procedure information read out by the readout part.

3. The service providing system according to Claim 1 or 2, wherein the procedure file is located in the service providing system itself.

4. The service providing system according to one of Claims 1 to 3, further comprising a conversion part for converting a received identifier into a converted identifier, based on a predetermined conversion rule, wherein the storage part stores the service provision information in correspondence with the converted identifier by the conversion part.

5. The service providing system according to one of Claims 1 to 4, further comprising an information receiving part for receiving an identifier and service provision information from a service provision information registration server, wherein the storage part newly stores the received service provision information on the basis of the received identifier.

6. The service providing system according to one of Claims 1 to 5, wherein the instructing part is configured as follows: where there exist multiple service procedure information entities read out, the instructing part inquires for service provision content details at service servers corresponding to the multiple service procedure information entities, selects one service procedure information entity on the basis of the service provision content details obtained, and instructs the associated service server to provide a service based on said one service procedure information entity.

7. The service providing system according to one of Claims 1 to 6, wherein an information expiration date about validity of information is set for each of the service provision information, and wherein the search part extracts only the service provision information within the information expiration date and presents the extracted information as a result of the search.

8. The service providing system according to one of Claims 1 to 7, wherein a service expiration date about validity of service provision is set for each of the service provision by the service server, and wherein the search part extracts only the service provision information about the service provision within the service expiration date and presents the extracted information as a result of the search.

9. A service providing method in a service providing system comprising a storage part storing service provision information containing at least information of a service type, an access point address of a service server, and a procedure file storage location about a procedure file storing service procedure information necessary for provision of a service on the basis of each identifier and providing a service on the basis of a request from a service utilizing terminal, the service providing method comprising: a request receiving step of receiving a service provision request containing at least an identifier, from the service utilizing terminal; and a search step of searching the storage part for the service provision information corresponding to the received service provision request.

10. The service providing method according to Claim 9, further comprising: a readout step of reading the service procedure information out of the procedure file, based on the procedure file storage location information in the service provision information acquired in the search; and an instruction step of instructing the service server on the basis of the access point address to provide the service based on the service procedure information read out.
